# FASCICULE DE BREVET EUROPEEN

(11) **EP 3 962 700 B1**
(45) Date de publication et mention de la délivrance du brevet: **13.03.2024**
(21) Numéro de dépôt: 20721624.3
(22) Date de dépôt: 30.04.2020
(51) Int. Cl.: B25J 9/00

(54) **DISPOSITIF D'ASSISTANCE PHYSIQUE NON MOTORISE DE TYPE EXOSQUELETTE POUR LE TRANSPORT MANUEL DE CHARGES**
NICHT-MOTORISIERTE KÖRPERHILFSVORRICHTUNG VOM EXOSKELETTTYP ZUM MANUELLEN TRANSPORT VON LASTEN
NON-MOTORIZED PHYSICAL-ASSISTANCE DEVICE OF EXOSKELETON TYPE FOR MANUALLY TRANSPORTING LOADS

(30) Priorité: 03.05.2019 FR 1904661
(43) Date de publication de la demande: 09.03.2022
(73) Titulaire: FM France SAS, 57370 Phalsbourg (FR); Université de Technologie de Compiègne, 60200 Compiègne (FR); Centre National de la Recherche Scientifique, 75794 Paris Cedex 16 (FR)
(72) Inventeur: BEN MANSOUR, Khalil, 60200 COMPIÈGNE (FR)
(74) Mandataire: Ipside
(86) Numéro de dépôt international: PCT/EP2020/062098
(87) Numéro de publication internationale: WO 2020/225114

(56) Documents cités:
- JP-A- 2008 295 696
- JP-A- 2016 130 160
- US-A1- 2011 266 323
- US-A1- 2012 184 880
- US-A1- 2016 339 583

## Description

### Domaine technique de l'invention

La présente invention concerne un dispositif d'assistance physique non robotisé/non motorisé de type exosquelette pour le transport manuel de charges. Elle s'applique, en particulier au transport de colis par des préparateurs de commande dans des entrepôts de manutention.

### Technique antérieure

Les opérateurs travaillant dans les entrepôts de manutention sont soumis à des contraintes importantes et à des conditions de travail parfois difficiles car ils soulèvent et transportent à longueur de journée des charges plus ou moins lourdes, sur de plus ou moins grandes distances, en faisant des mouvements plus ou moins ergonomiques et adaptés à leur morphologie.

De nombreux dispositifs d'assistance ont été créés depuis plusieurs décennies pour améliorer ces conditions de travail et soulager l'utilisateur lors des opérations lorsqu'ils soulèvent, transportent et reposent la charge soulevée. Parmi ces dispositifs se trouvent toute une série d'exosquelettes utilisant des moyens mécaniques divers, ou des moyens robotisés faisant appel notamment à des vérins.

Ces dispositifs d'assistance physique ou ces robots d'assistance physique sont décrits notamment dans les brevets FR3065387A1, sur lequel repose le préambule de la revendication 1, FR3046038A1, FR3046052A1.

FR2993811A1 ou encore EP3189945B1. Des systèmes plus simples comme le Corfor ^{®} permettent également une assistance en utilisant des sangles élastiques reliant les épaules aux dessous des genoux et aux mollets. Tous ces dispositifs présentent différents inconvénients parmi lesquels le poids élevé, le manque d'ergonomie et la faible adaptabilité à la morphologie des utilisateurs, la conception complexe et fragile, la faible autonomie (pour les systèmes motorisés et/ou à assistance par vérins), l'utilisation peu pratique (temps pour s'équiper), le manque de fluidité et de liberté de mouvement, le report du poids du colis sur les épaules et le dos, la compression de la cage thoracique, la faible efficacité et le coût élevé.

### Présentation de l'invention

La présente invention vise à remédier à ces inconvénients avec une approche totalement novatrice.

A cet effet, la présente invention se rapporte à un dispositif d'assistance physique non motorisé de type exosquelette tel que défini dans la revendication 1.

Cette solution permet à un utilisateur portant le dispositif d'assistance conforme à la présente invention, lequel est dépourvu de moyens motorisés ou robotisés tels que des vérins, de soulever et transporter avec ses mains des charges de plusieurs kilogrammes, voire plusieurs dizaines de kilogrammes, en ne ressentant qu'un poids extrêmement faible sur le dos et les membres supérieurs grâce au report de ce dernier sur ses hanches et son bassin, bien plus adapté pour cela.

Ainsi, non seulement l'assistance n'est pas effectuée par l'intermédiaire d'un dispositif motorisé/robotisé lourd, encombrant et/ou complexe à fabriquer et faire fonctionner, mais la charge soulevée paraît légère sans que le poids de celle-ci ne soit supporté par les épaules ou le dos de l'utilisateur.

Contrairement aux solutions existantes, ce dispositif permet d'assister le port de charge dans le milieu industriel en réduisant les efforts engendrés par le poids du colis au niveau des membres supérieurs et du dos. Or ces efforts sont la cause de 50 % des arrêts de travail. Ce dispositif permet ainsi de maintenir le niveau de la productivité tout en prévenant l'apparition des TMS.

Enfin, l'utilisation d'une seule colonne centrale sensiblement alignée avec la colonne vertébrale de l'utilisateur et se divisant en deux branches latérales passant chacune au-dessus de ses épaules permet d'avoir des mouvements naturels et fluides sans risquer d'être dérangé par le dispositif, notamment au niveau du cou, de la tête et des bras.

Le fait de prévoir une structure avec les branches latérales ne se prolongeant pas (ou extrêmement peu) devant le corps (épaules, torse) de l'utilisateur permet d'obtenir un dispositif très léger, très peu encombrant et très bien équilibré (droite/gauche et avant/arrière).

On notera également que le dispositif n'est pas en contact/ne soutient pas les humérus et/ou les coudes et/ou les avant-bras de l'utilisateur, ce qui permet là encore une très grande mobilité et souplesse d'utilisation et évite une gêne à l'usage et/ou des douleurs.

L'invention est mise en oeuvre selon les modes de réalisation et les variantes exposées ci-après, lesquelles sont à considérer individuellement ou selon toute combinaison techniquement opérante :
- les deux branches latérales sont verticalement éloignées des épaules de l'utilisateur d'une distance comprise entre environ 2 et 20 centimètres, de préférence entre sensiblement 5 et 15 centimètres, ce qui autorise d'une part à l'utilisateur de lever ses bras assez haut sans entrer en contact avec les branches, et ce qui empêche d'autre part tout report de la charge sur ses épaules ou son cou grâce à l'éloignement desdites branches ;
- les branches latérales sont réglables en hauteur et/ou en rotation par rapport à la colonne centrale, ce qui permet de s'adapter à différentes morphologies ou modes d'utilisation ;
- la colonne centrale est réglable en hauteur au moins au niveau d'une partie supérieure de manière à s'adapter à différentes tailles d'utilisateur et améliore le confort d'utilisation ;
- l'organe de transfert d'efforts comporte en outre des moyens longilignes extensibles/rétractables manuellement pour en changer la longueur, lesdits moyens longilignes étant disposés au moins le long des branches latérales de la colonne, ce qui permet à l'utilisateur de manipuler au mieux la charge portée et gérer l'assistance au soulèvement/transport de cette dernière ;
- les moyens longilignes sont des fils, des câbles, des cordes ou des sangles, ce qui constitue une solution légère et facile à concevoir et utiliser ;
- les branches latérales de l'organe de transfert d'efforts sont constituées de tubes creux et sont traversées au moins partiellement par les moyens longilignes, ce qui permet une parfaite intégration de l'ensemble des moyens mis en oeuvre (masquage des moyens longilignes) afin de rendre le dispositif compact, léger et pratique à utiliser ;
- les moyens longilignes traversent chacun un guide muni de moyens de réduction des frottements, ce qui garantit des mouvements fluides et efficaces lors du soulèvement et le transport des charges, et une réduction de l'usure des moyens utilisés à cet effet ;
- les moyens de réduction des frottements sont constitués par un revêtement interne en téflon ^{®} recouvrant localement l'intérieur des tubes creux des branches latérales ;
- chaque moyen longiligne est relié à un enrouleur/dérouleur solidaire de la colonne centrale et permettant, en utilisation, auxdits moyens longilignes de s'allonger/se rétracter automatiquement pour changer de longueur, ce qui permet une optimisation des opérations de soulèvement et de transport de la charge en fonction de la morphologie (bras) de l'utilisateur car les moyens longilignes accompagnent en permanence et de manière fluide et rapide ses propres mouvements des mains/bras/épaules ;
- les moyens longilignes sont chacun équipés, à une extrémité libre, d'un moyen de préhension manuelle de type manchon, de sorte que les mains de l'utilisateur sont en permanence reliées auxdits moyens longilignes durant l'utilisation du dispositif ;
- le dispositif est équipé, proche de l'une au moins des poignées, d'un frein manuel débrayable par l'utilisateur pour bloquer/débloquer la longueur desdits moyens longiligne, ce qui facilite les opérations de soulèvement et de transport de la charge car l'opérateur contrôle de manière très simple et intuitive l'assistance apportée par le dispositif en bloquant les moyens longilignes quand il le désire ;
- la colonne centrale comporte un pivot d'articulation dans une zone proche de la liaison avec la ceinture pelvienne pour suivre l'inclinaison du dos de l'utilisateur par rapport à ses membres inférieurs, ce qui permet à l'utilisateur une grande liberté de mouvement, notamment pour soulever/poser des charges posées relativement bas ;
- un élément élastique de rappel relie la ceinture pelvienne à une partie inférieure de la colonne centrale, ce qui procure une assistance supplémentaire à l'utilisateur, en particulier lorsque ce dernier doit passer d'une position courbée vers l'avant à une position redressée ;
- la colonne centrale est pourvue au minimum d'un coussin dorsal, ce qui améliore le confort d'utilisation du dispositif ;
- le dispositif comporte également des bretelles d'épaules pour son transport par l'utilisateur, ce qui permet un bon maintien du dispositif sur le dos de l'utilisateur lorsque ce dernier l'utilise pour ses opérations de manutention ; et
- le dispositif comporte en outre des moyens élastiques extensibles reliant la ceinture pelvienne aux genoux de l'utilisateur, ceci afin notamment de l'assister lorsqu'il passe d'une position accroupie à une position debout.

### Brève description des figures

D'autres avantages, buts et caractéristiques de la présente invention ressortent de la description qui suit faite, dans un but explicatif et nullement limitatif, en regard des dessins annexés, dans lesquels :
la figure 1 est une vue en perspective isométrique arrière d'un dispositif conforme à la présente invention porté par un utilisateur,
la figure 2 est une vue en perspective isométrique avant du dispositif de la figure 1,
la figure 3 est une vue de face de la figure 2,
la figure 4 est une vue de dos de la figure 2,
la figure 5 est une vue de dessus de la figure 2,
la figure 6 est une vue de côté de la figure 2,la figure 7 est une vue de détail d'une partie haute des figures 2 à 6,
la figure 8 est une vue de détail de la figure 3,
la figure 9 est une vue de détail d'un frein du dispositif dans une première position, et
la figure 10 est une vue similaire à la figure 9 avec le frein dans une seconde position.

### Description des modes de réalisation

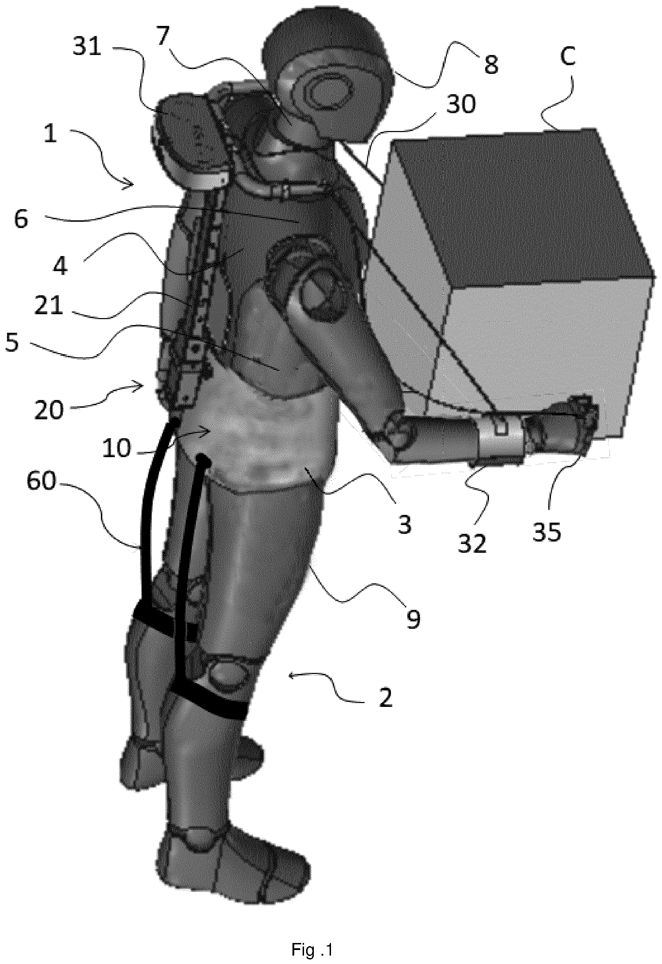

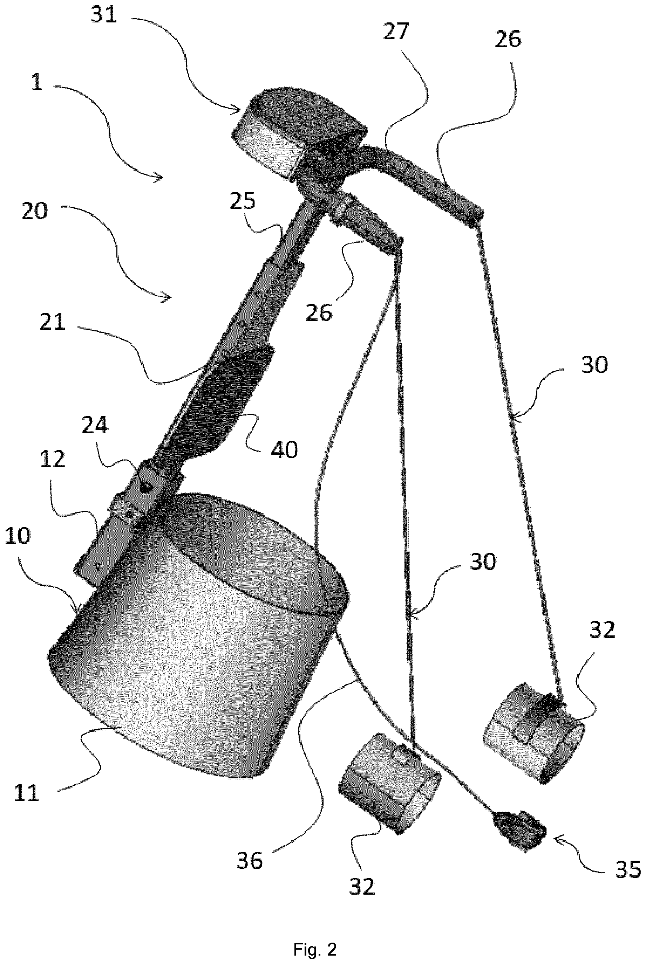

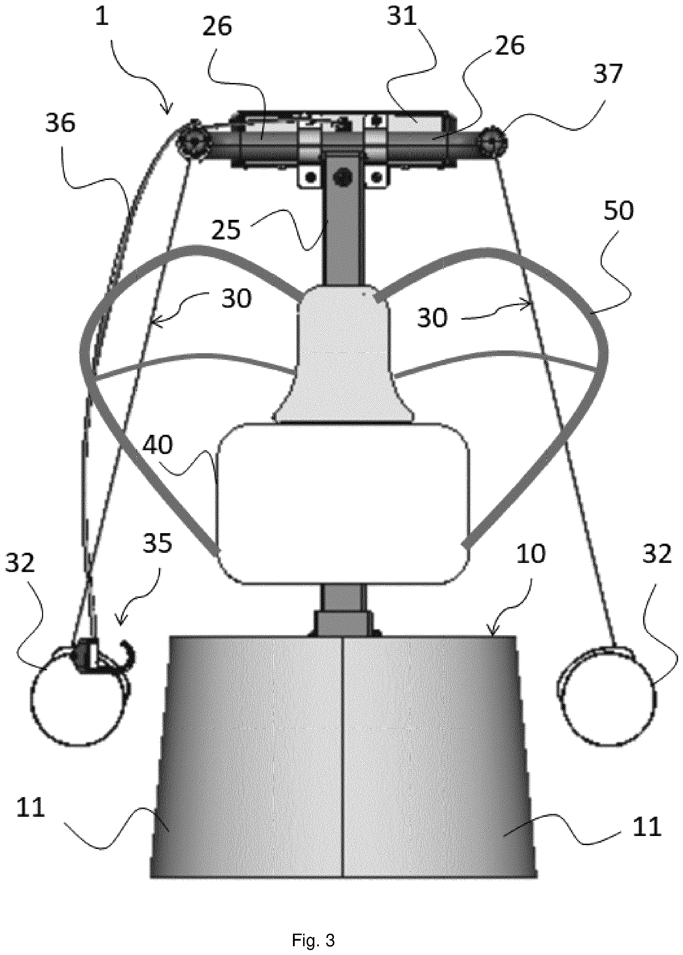

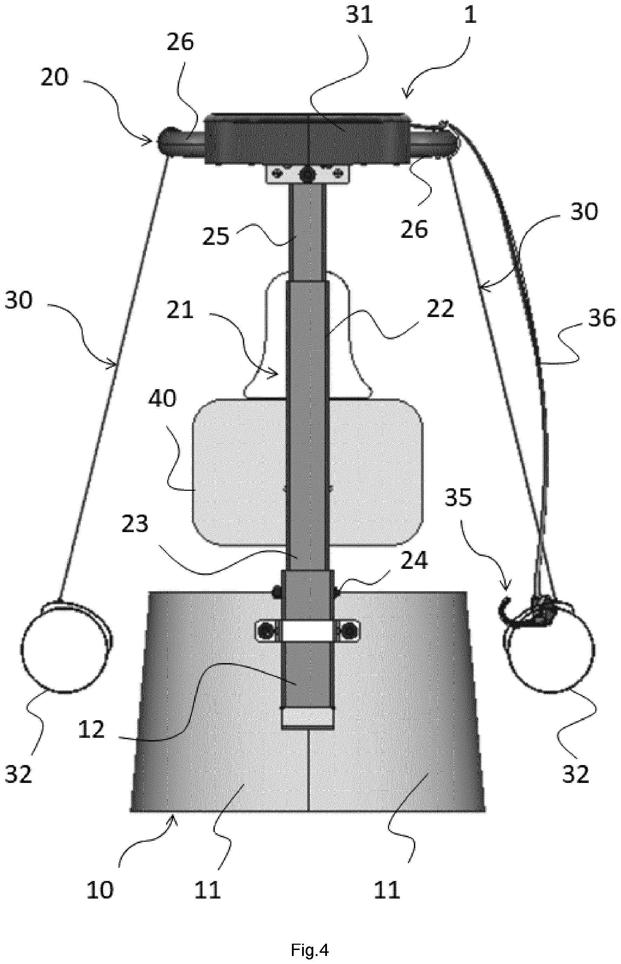

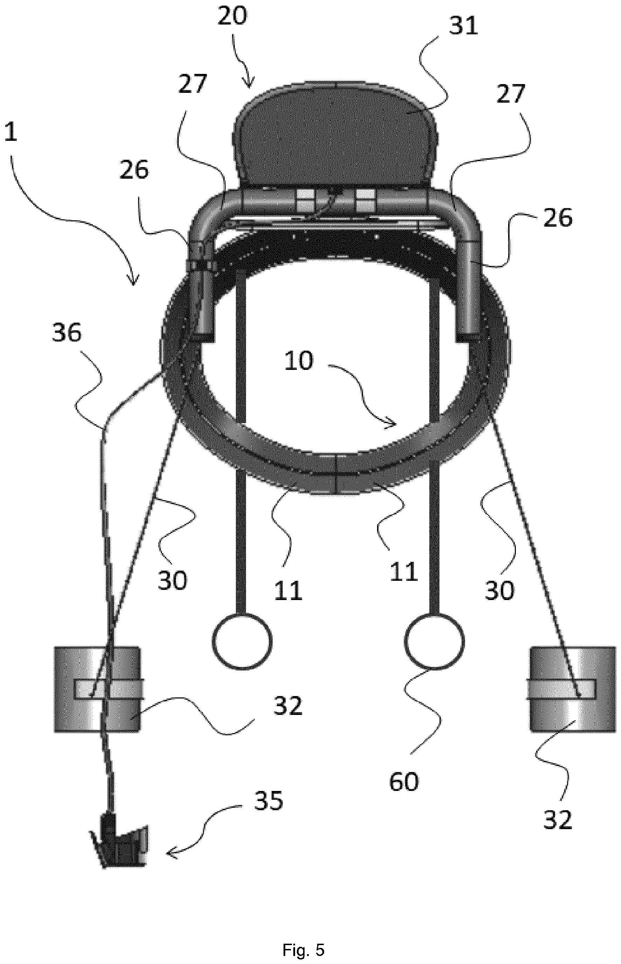

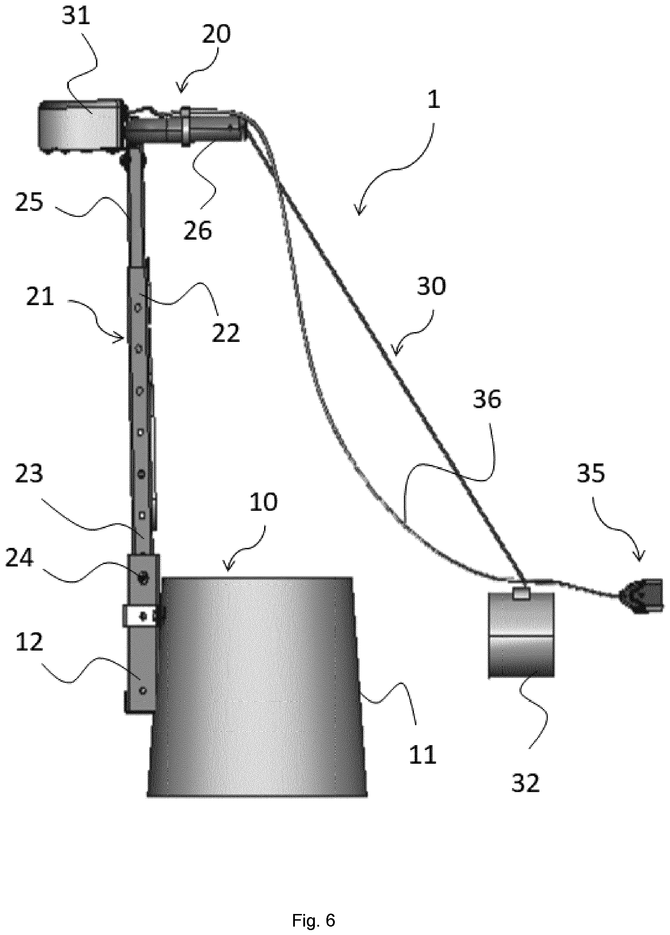

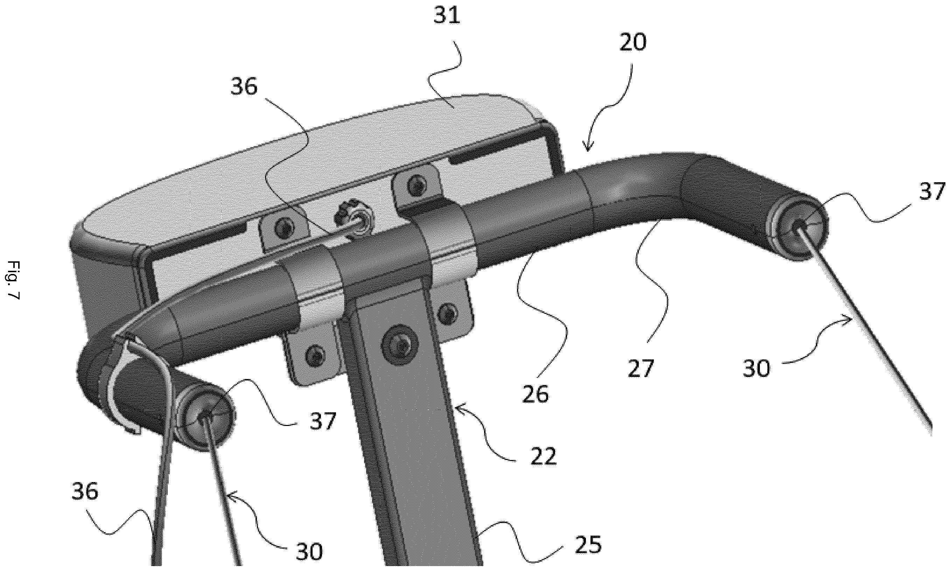

Les figures 1 à 10 représentent un dispositif 1 d'assistance physique non robotisé/non motorisé de type exosquelette prévu pour être porté par un utilisateur 2 dans un entrepôt de livraison, par exemple un préparateur de commande ou un manutentionnaire, afin de soulager, en utilisation, ses membres supérieurs 5 lorsqu'il soulève et transporte une charge C telle qu'un colis. L'utilisateur 2 tel que schématisé comporte des hanches 3, un dos 4, des membres supérieurs 5, des épaules 6, un cou 7, une tête 8 et des membres inférieurs 9.

Ce dispositif d'assistance physique 1 comporte principalement, conformément à la présente invention, une ceinture pelvienne 10 à l'arrière de laquelle sont fixés des moyens 20 d'assistance au levage/transport d'une charge.

Plus précisément, la ceinture pelvienne 10 est destinée à être serrée autour de la taille/des hanches 3 de l'utilisateur 2. Elle comporte pour cela des sangles ajustables 11 et une platine arrière 12 destinée à supporter les moyens 20 d'assistance au levage/transport de charge.

Les moyens 20 d'assistance au transport de charge comportent quant à eux un organe de transfert d'efforts constitué par un support dorsal rigide 21 dressé verticalement à partir de la ceinture pelvienne 10.

Plus précisément, le support dorsal rigide 21 comporte une colonne centrale (ou mât/perche) 22 divisée en une première petite partie basse 23 fixée à la platine 12, une articulation 24 intermédiaire et une seconde grande partie haute 25 longeant le dos 4 de l'utilisateur. L'articulation intermédiaire 24 permet en particulier à la colonne centrale 22 de s'incliner en suivant les mouvements de l'utilisateur 2, en particulier en s'adaptant à l'angle formé entre son dos 4 et ses membres inférieurs 9 lorsqu'il se penche ou se redresse.

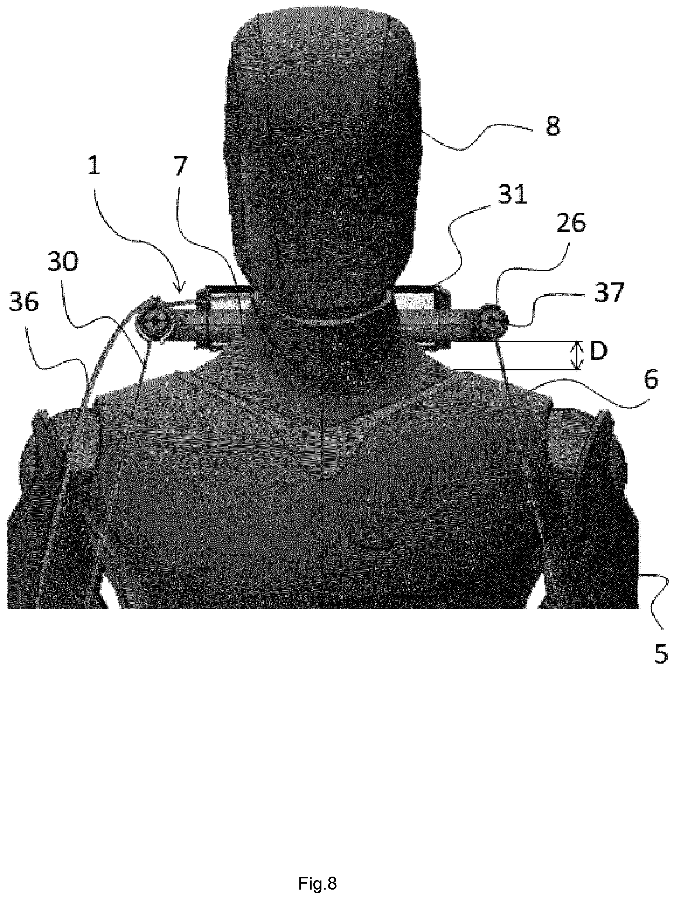

La partie haute 25 de la colonne centrale 22 se prolonge quant à elle par deux branches latérales 26 s'écartant de ladite partie haute 25 de part et d'autre du cou 7 de l'utilisateur 2 (voir figure 8 par exemple).

Avantageusement, les deux branches 26 présentent une courbure 27 et passent au-dessus des épaules 6 de l'utilisateur 2, sans être en contact avec ces dernières. Typiquement les branches latérales 26 du support dorsal 21 sont disposées, en utilisation, à une distance D des épaules 6 de l'utilisateur 2 comprise entre quelques centimètres et quelques dizaines de centimètres, de préférence entre environ 2 et 20 centimètres et avantageusement entre sensiblement 5 et 15 centimètres. Ces branches sont également suffisamment éloignées du cou 7 et de la tête 8 de l'utilisateur 2 pour ne pas gêner ce dernier dans ses mouvements.

Les branches latérales 26 sont réglables en hauteur et en rotation autour de la partie haute 25 de la colonne centrale 22 pour s'adapter à différentes morphologies et/ou modes préférés d'utilisation (certains utilisateurs pouvant préférer que les branches 26 soient plus ou moins éloignées de leurs épaules 6 et/ou de leur cou 7 et/ou de leur tête 8). La partie haute 25 de la colonne centrale 22 est également réglable en hauteur.

Les branches latérales 26 sont constituées de tubes creux pour permettre de loger des moyens longilignes 30 extensibles/rétractables manuellement pour en changer la longueur dont l'utilisation sera décrite ultérieurement. Toutes les parties qui constituent le support dorsal 21 peuvent être creuses afin de réduire le poids du dispositif. Les tubes creux du support dorsal sont par exemple réalisés en acier, en fibre de carbone ou en matériaux composites.

Les moyens 30 longilignes extensibles/rétractables manuellement pour en changer la longueur sont constitués dans le cas présent par deux câbles disposés à l'intérieur des tubes creux des branches latérales 26, lesquels forment alors un guide et sont avantageusement tapissés à cet effet d'un moyen de réduction des frottements 37 tel qu'une couche de téflon ^{®}.

Chaque câble 30 est relié à un enrouleur/dérouleur 31 monté dans un boitier commun solidaire de la colonne centrale 22, plus spécifiquement de la partie haute 25. Ces deux enrouleurs 31 permettent, en utilisation, auxdits moyens longilignes 30 de s'allonger/se rétracter pour changer de longueur. De plus, chaque câble 30 est muni à son extrémité libre d'un manchon 32 destiné à être porté autour des poignets de l'utilisateur 2 et permettant à ce dernier d'allonger/ raccourcir lesdits câbles 30 tout en portant un colis C.

Chaque enrouleur 31 est de type « laisse d'animal de compagnie/enrouleur de câble d'aspirateur » et se présente comme un système à ressort hélicoïdal qui permet de créer une force de traction continue sur le câble 30 considéré afin de s'opposer à l'allongement de ce dernier lorsque l'utilisateur 2 tire sur un manchon 32.

Le dispositif 1 est par ailleurs équipé proche d'un des manchons 32, d'un frein manuel 35 débrayable par l'utilisateur 2 pour bloquer/débloquer la longueur des câbles 30 en agissant directement sur les enrouleurs 31.

Un élément élastique de rappel (non représenté) relie la ceinture pelvienne 10 à la partie inférieure 23 de la colonne centrale 22 pour faciliter le passage de la position inclinée à la position droite de l'utilisateur 2.

La partie médiane 25 de la colonne centrale 22 est par ailleurs équipée d'un coussin 40 destiné à rendre le port du dispositif 1 plus confortable pour l'utilisateur 2. Avantageusement ce coussin 40 est placé plus bas que les enrouleurs 31, proche du creux lombaire.

Le dispositif 1 comporte également des bretelles d'épaules 50 pour faciliter son transport et éviter qu'il bouge ou tombe en cours d'utilisation.

Enfin, le dispositif 1 comporte des moyens élastiques extensibles 60 reliant la ceinture pelvienne 10 aux membres inférieurs 9 de l'utilisateur 2, par exemple ses genoux, afin de faciliter le passage de la position jambes pliées à la position jambes droites (cas où l'utilisateur 2 s'accroupie pour saisir un colis et se relève pour le transporter ou le poser sur une étagère).

L'utilisation du dispositif 1 conforme à la présente invention est particulièrement simple.

Une fois porté sur le dos de l'utilisateur 2 à l'aide des bretelles réglables 50 et une fois la ceinture pelvienne 10 serrée et réglée autour des hanches 3, il suffit à l'utilisateur 2 de saisir un colis C avec ses deux mains, après avoir installé les manchons 32 autour de ses poignets et saisi le frein 35.

Les mouvements des bras 5 et des épaules 6 de l'utilisateur 2 sont accompagnés en permanence par l'allongement ou le raccourcissement des câbles 30 car ces derniers sont reliés indirectement au colis C par l'intermédiaire des mains et des manchons 32. Ainsi, si l'utilisateur 2 plie les bras au niveau de ses coudes pour remonter le colis (en restant debout sans plier le torse), les câbles 30 vont se raccourcir grâce à la force de traction exercée par les enrouleurs 31. A l'inverse, si l'utilisateur 2 déplie ses bras (par exemple pour saisir un colis posé au sol), les câbles 30 vont automatiquement s'allonger à l'encontre de la force de traction exercée par les enrouleurs 31.

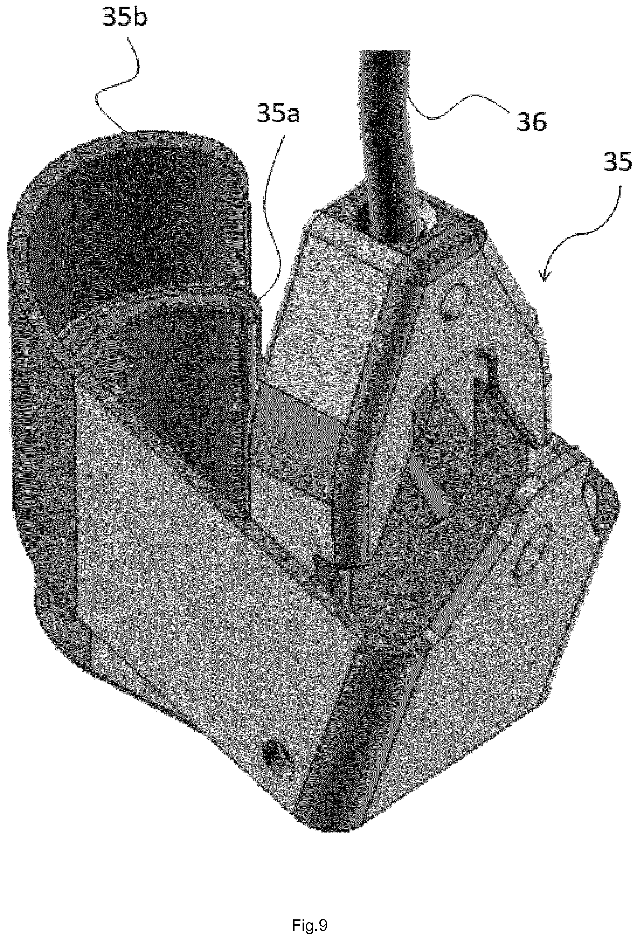

En position normale d'utilisation, le frein 35 est désactivé (figure 9), c'est-à-dire qu'il ne bloque pas les enrouleur 31 et donc la longueur des câbles 30, lesquels suivent donc parfaitement les mouvements des bras 5 de l'utilisateur 2 et (s'allongent/se raccourcissent) au gré de ces mouvements.

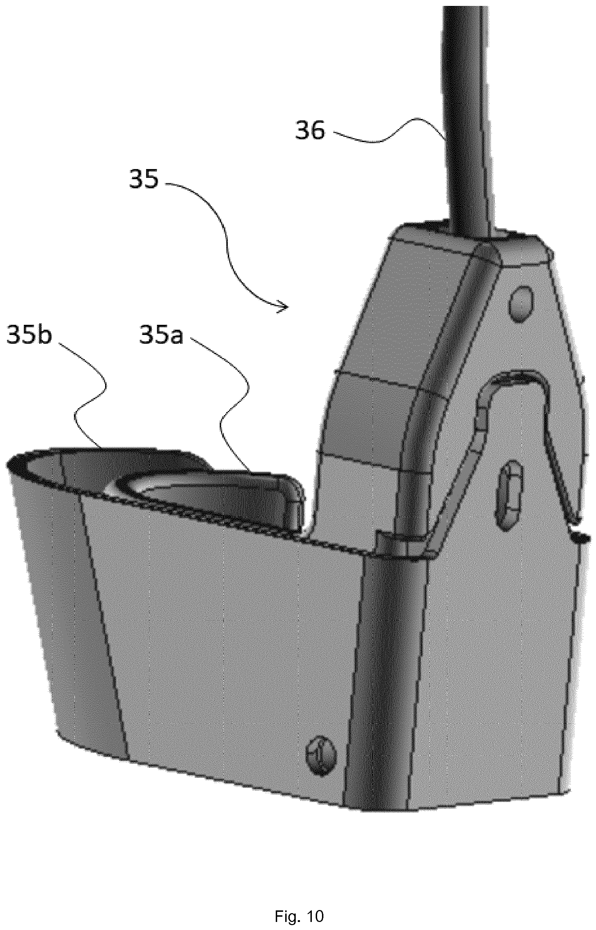

Lorsque l'utilisateur 2 estime qu'il a saisi le colis correctement et à une distance du sol agréable pour son transport, il bloque manuellement le frein 35 en le relâchant (figure 10), ce qui a pour effet de stopper l'allongement ou le raccourcissement des câbles 30 car les enrouleurs 31 sont bloqués dans leur position.

Dans cette position, l'utilisateur 2 n'a plus qu'à tenir le colis C avec ses mains pour éviter de le faire glisser/tomber au sol, sans avoir à supporter son poids avec ses bras 5 et ses épaules 6, les câbles 30 reprenant cet effort lié au poids du colis C. Cet effort est à son tour reporté sur les tubes creux des branches latérales 26 et sur les enrouleurs 31 reliés à la colonne 22, puis sur la ceinture pelvienne 10 par l'intermédiaire de l'organe de transfert d'efforts constitué par le support dorsal rigide 21.

Les branches latérales 26 du support dorsal 21 n'étant jamais au contact des épaules 6, du cou 7 ou des membres supérieurs 5 de l'utilisateur 2 (voir figure 8 notamment), le poids du colis C ne peut pas reposer sur ces parties du corps humain car ce sont les câbles 30 qui prennent le relais, en collaboration avec les branches rigides 26, les enrouleurs 31 et la colonne 22. Or, celle-ci, tout comme les branches latérales 26 et les enrouleurs 31, étant fixée à la ceinture pelvienne 10, c'est en réalité majoritairement cette dernière qui supporte tout le poids du colis grâce à la chaîne de transfert d'efforts décrite précédemment. La colonne vertébrale de l'utilisateur 2 n'est pas non plus sollicitée car les efforts ne passent pas par cette dernière. Les épaules et la colonne vertébrale de l'utilisateur 2 supportent uniquement une très faible partie du dispositif 1 (la majorité de son propre poids étant supportée par la ceinture pelvienne 10).

L'utilisateur 2 peut donc transporter le colis C avec aisance, sans avoir à supporter le poids de ce dernier avec ses mains, ses bras ou ses épaules. Il doit juste tenir le colis C avec ses mains pour l'empêcher de glisser ou de tomber et veiller à ce que les câbles 30 restent bien tendus pour supporter. Les manchons 32 ne nuisent pas à cette opération car ils sont bien accrochés aux poignets de l'utilisateur2

Une fois le colis C posé à l'endroit souhaité, l'utilisateur 2 n'a plus qu'à desserrer le frein 35 en agissant dessus afin de débloquer les enrouleurs 31.

Ce dispositif d'assistance physique 1 présente ainsi une aide au port de charge C et constitue de ce fait un outil de prévention des risques de troubles musculosquelettiques qui provoquent la dégradation de la santé des ouvriers et génèrent des arrêts de travail qui pénalisent les entreprises.

La solution proposée est adaptable à la morphologie de nombreux utilisateurs 2 grâce aux différents réglages qu'il propose (colonne centrale 22, sangles de la ceinture pelvienne 10, bretelles 50, branches 26). Elle est capable de soulager à la fois les membres supérieurs 5, les épaules 6 et le dos 4 de l'utilisateur lors des travaux de port de charge. L'allégement des efforts soulage le corps au niveau des bras et du dos, grâce à un transfert de poids sur la ceinture pelvienne 10. Le soutien dorsal améliore également la prise de conscience de l'usager quant à sa posture. Dans sa forme actuelle, le poids de ce prototype d'assistance est d'environ un kilogramme et il s'enfile en quelques secondes. Il s'agit donc d'un équipement extrêmement léger et d'utilisation très intuitive.

Le transfert de poids du colis C directement au niveau de la région lombaire permet de réduire le bras de levier de la force de soulèvement du colis, ce qui permet d'économiser les forces musculaires au niveau des membres supérieurs et du dos.

Le dispositif présenté ici se distingue donc des solutions existantes par les points et avantages suivants :
- Aucun poids supplémentaire n'est supporté par les épaules et le dos ;
- Pas de compression au niveau de la cage thoracique ;
- Pas de motorisation et de pistons ;
- Pas de mouvements imposés par le dispositif ;
- Transfert direct du poids au niveau du bassin ;
- Pas de contrainte articulaire ;
- Les mains sont libérées de toute instrumentation encombrante et gênante.

Il doit être bien entendu que la description détaillée de l'objet de l'invention, donnée uniquement à titre d'illustration, ne constitue en aucune manière une limitation, les équivalents techniques étant également compris dans le champ de la présente invention.

Ainsi, les câbles peuvent être remplacés par des sangles, des cordes ou des fils.

La forme des branches peut varier dès lors qu'elles respectent les contraintes imposées de distance au regard des épaules/cou/tête de l'utilisateur.

D'autres réglages peuvent être prévus pour adapter au mieux le dispositif 1 à la morphologie des utilisateurs 2.

## Revendications

1. Dispositif (1) d'assistance physique non motorisé de type exosquelette, adapté pour être porté par un utilisateur (2) afin de soulager, en utilisation, au moins les membres supérieurs (5) dudit utilisateur soulevant et transportant manuellement une charge (C), ledit dispositif (1) comportant notamment une ceinture pelvienne (10) propre à entourer la taille/les hanches (3) de l'utilisateur (2) et des moyens (20) d'assistance au levage et au transport de charge délestant le dos (4), les membres supérieurs (5), les épaules (6) et le cou (7) de l'utilisateur (2), les moyens (20) d'assistance au levage et au transport de charge comprenant un organe (21) de transfert, exclusivement sur la ceinture pelvienne (10), des efforts verticaux provoqués par le poids de la charge (C) soulevée/transportée par l'utilisateur (2), l'organe (21) de transfert d'efforts étant constitué par un support dorsal rigide, **caractérisé en ce que** ledit support dorsal rigide comporte une unique colonne centrale (22) se divisant en deux branches latérales (26) passant au-dessus des épaules (6) de l'utilisateur (5), sans contact avec ces dernières ni les bras de ce dernier, et **en ce que** lesdites branches latérales (26) sont dressées perpendiculairement à la colonne centrale (22) et se projettent en avant de part et d'autre du cou (7) de l'utilisateur (5).

2. Dispositif (1) selon la revendication 1, **caractérisé en ce que**, ledit dispositif (1) étant porté par l'utilisateur (2) et en utilisation, les deux branches latérales (26) sont éloignées verticalement des épaules (6) de l'utilisateur (2) d'une distance D comprise entre environ 2 et 20 centimètres, de préférence entre sensiblement 5 et 15 centimètres.

3. Dispositif (1) selon la revendication 2, **caractérisé en ce que** les branches latérales (26) sont réglables en hauteur et/ou en rotation par rapport à la colonne centrale (22).

4. Dispositif (1) selon l'une quelconque des revendications 1 à 3, **caractérisé en ce que** la colonne centrale (22) est réglable en hauteur au moins au niveau d'une partie supérieure (25).

5. Dispositif (1) selon l'une quelconque des revendications 1 à 4, **caractérisé en ce que** l'organe de transfert d'efforts (21) comporte en outre des moyens (30) longilignes extensibles/rétractables manuellement pour en changer la longueur, lesdits moyens longilignes (30) étant disposés au moins le long des branches latérales (26) de la colonne centrale (22).

6. Dispositif (1) selon la revendication 5, **caractérisé en ce que** les moyens longilignes (30) sont des fils, des câbles, des cordes ou des sangles.

7. Dispositif (1) selon l'une quelconque des revendications 5 à 6, **caractérisé en ce que** les branches latérales (26) de l'organe de transfert d'efforts (21) sont constituées de tubes creux et sont traversées au moins partiellement par les moyens longilignes (30).

8. Dispositif (1) selon l'une quelconque des revendications 5 à 7, **caractérisé en ce que** les moyens longilignes (30) traversent chacun un guide muni de moyens (37) de réduction des frottements.

9. Dispositif (1) selon les revendications 7 et 8, **caractérisé en ce que** les moyens (37) de réduction des frottements sont constitués par un revêtement interne en téflon ^{®} recouvrant localement l'intérieur des tubes creux des branches latérales (26).

10. Dispositif (1) selon l'une quelconque des revendications 5 à 9, **caractérisé en ce que** chaque moyen longiligne (30) est relié à un enrouleur/dérouleur (31) solidaire de la colonne centrale (22) et permettant, en utilisation, auxdits moyens longilignes (30) de s'allonger/se rétracter automatiquement pour changer de longueur.

11. Dispositif (1) selon l'une quelconque des revendications 5 à 10, **caractérisé en ce que** les moyens longilignes (30) sont chacun équipés, à une extrémité libre, d'un moyen de préhension manuelle (32) de type manchon.

12. Dispositif (1) selon la revendication 11, **caractérisé en ce qu'**il est équipé, proche de l'une au moins des poignées (32), d'un frein manuel (35) débrayable par l'utilisateur (2) pour bloquer/débloquer la longueur desdits moyens longiligne (30).

13. Dispositif (1) selon l'une quelconque des revendications 1 à 11, **caractérisé en ce que** la colonne centrale (22) comporte un pivot d'articulation (24) dans une zone proche de la liaison (12) avec la ceinture pelvienne (10) pour suivre l'inclinaison du dos (4) de l'utilisateur (2) par rapport à ses membres inférieurs (9).

14. Dispositif (1) selon l'une quelconque des revendications 1 à 12, **caractérisé en ce qu'**un élément élastique de rappel relie la ceinture pelvienne (10) à une partie inférieure (23) de la colonne centrale (22).

15. Dispositif (1) selon l'une quelconque des revendications 1 à 13, **caractérisé en ce que** la colonne centrale (22) est pourvue d'au moins un coussin dorsal (40).

16. Dispositif (1) selon l'une quelconque des revendications précédentes, **caractérisé en ce qu'**il comporte également des bretelles d'épaules (50) pour son transport par l'utilisateur (2).

17. Dispositif (1) selon l'une quelconque des revendications précédentes, **caractérisé en ce que**, ledit dispositif (1) étant porté par l'utilisateur (2) et en utilisation, il comporte en outre des moyens élastiques extensibles (60) reliant la ceinture pelvienne (10) aux membres inférieurs (9) de l'utilisateur (2).

## Patentansprüche

1. Nicht motorisierte Körperhilfsvorrichtung (1) vom Typ Exoskelett, das dazu ausgelegt ist, von einem Benutzer (2) getragen zu werden, um bei der Benutzung zumindest die oberen Gliedmaßen (5) des Benutzers, der manuell eine Last (C) hebt und transportiert, zu entlasten, wobei die Vorrichtung (1) insbesondere einen Beckengurt (10), der dazu geeignet ist, dass er um die Taille/die Hüfte (3) des Benutzers (2) umschließt, und ein Hilfsmittel (20) zum Heben und Transportieren von Lasten, das den Rücken (4), die oberen Gliedmaßen (5), die Schultern (6) und den Hals (7) des Benutzers (2) entlastet, umfasst, wobei das Hilfsmittel (20) zum Heben und Transportieren von Lasten ein Element (21) zum Übertragen von vertikalen Kräften, die durch das Gewicht der vom Benutzer (2) gehobenen/transportierten Last (C) verursacht werden, ausschließlich auf den Beckengurt (10) umfasst, wobei das Kräfteübertragungselement (21) aus einer starren Rückenstütze besteht,
**dadurch gekennzeichnet, dass** die starre Rückenstütze eine einzige Mittelsäule (22) umfasst, die sich in zwei Seitenzweige (26) teilt, die über die Schultern (6) des Benutzers (5) verlaufen, ohne diese oder die Arme des Benutzers zu berühren, und dadurch, dass die Seitenzweige (26) senkrecht zur Mittelsäule (22) stehen und auf beiden Seiten des Halses (7) des Benutzers (5) nach vorne ragen.

2. Vorrichtung (1) nach Anspruch 1, **dadurch gekennzeichnet, dass** die Vorrichtung (1) von dem Benutzer (2) getragen wird und die beiden Seitenzweige (26) bei der Benutzung mit einem Abstand D von ungefähr 2 bis 20 Zentimeter, vorzugsweise im Wesentlichen 5 bis 15 Zentimeter, vertikal von den Schultern (6) des Benutzers (2) entfernt sind.

3. Vorrichtung (1) nach Anspruch 2, **dadurch gekennzeichnet, dass** die Seitenzweige (26) in der Höhe und/oder in der Drehung in Bezug auf die Mittelsäule (22) verstellbar sind.

4. Vorrichtung (1) nach einem der Ansprüche 1 bis 3, **dadurch gekennzeichnet, dass** die Mittelsäule (22) in der Höhe zumindest an einem oberen Abschnitt (25) verstellbar ist.

5. Vorrichtung (1) nach einem der Ansprüche 1 bis 4, **dadurch gekennzeichnet, dass** das Kräfteübertragungselement (21) ferner langgliedrige Mittel (30), die manuell ausgezogen/eingezogen werden können, um seine Länge zu ändern, umfasst, wobei die langgliedrigen Mittel (30) zumindest entlang der Seitenzweige (26) der Mittelsäule (22) angeordnet ist.

6. Vorrichtung (1) nach Anspruch 5, **dadurch gekennzeichnet, dass** die langgliedrigen Mittel (30) Drähte, Kabel, Seile oder Bänder sind.

7. Vorrichtung (1) nach einem der Ansprüche 5 bis 6, **dadurch gekennzeichnet, dass** die Seitenzweige (26) des Kräfteübertragungselements (21) aus hohlen Rohren bestehen und zumindest teilweise von den langgliedrigen Mitteln (30) durchquert werden.

8. Vorrichtung (1) nach einem der Ansprüche 5 bis 7, **dadurch gekennzeichnet, dass** die langgliedrigen Mittel (30) jeweils durch eine Führung verlaufen, die mit einem Mittel (37) zur Reduzierung von Reibungen versehen ist.

9. Vorrichtung (1) nach den Ansprüchen 7 und 8, **dadurch gekennzeichnet, dass** das Reibungsreduzierungsmittel (37) aus einer Innenbeschichtung aus Teflon ^{®} besteht, die lokal die Innenseite der hohlen Rohre der Seitenzweige (26) bedeckt.

10. Vorrichtung (1) nach einem der Ansprüche 5 bis 9, **dadurch gekennzeichnet, dass** jedes langgliedrige Mittel (30) mit einer Aufwickel-/Abwickelvorrichtung (31) verbunden ist, die fest mit der Mittelsäule (22) verbunden ist und bei der Benutzung ermöglicht, dass sich die langgliedrigen Mittel (30) automatisch verlängern/einziehen, um die Länge zu ändern.

11. Vorrichtung (1) nach einem der Ansprüche 5 bis 10, **dadurch gekennzeichnet, dass** die langgliedrigen Mittel (30) jeweils an einem freien Ende mit einem hülsenartigen manuellen Griffmittel (32) versehen sind.

12. Vorrichtung (1) nach Anspruch 11, **dadurch gekennzeichnet, dass** sie in der Nähe von mindestens einem der Griffe (32) mit einer manuellen Bremse (35) ausgestattet ist, die vom Benutzer (2) ausgeschaltet werden kann, um die Länge der langgliedrigen Mittel (30) zu blockieren/freizugeben.

13. Vorrichtung (1) nach einem der Ansprüche 1 bis 11, **dadurch gekennzeichnet, dass** die Mittelsäule (22) einen Gelenkzapfen (24) in einem Bereich in der Nähe der Verbindung (12) mit dem Beckengurt (10) umfasst, um der Neigung des Rückens (4) des Benutzers (2) in Bezug auf seine unteren Gliedmaßen (9) zu folgen.

14. Vorrichtung (1) einem der Ansprüche 1 bis 12, **dadurch gekennzeichnet, dass** ein elastisches Rückstellelement den Beckengurt (10) mit einem unteren Teil (23) der Mittelsäule (22) verbindet.

15. Vorrichtung (1) nach einem der Ansprüche 1 bis 13, **dadurch gekennzeichnet, dass** die Mittelsäule (22) mindestens mit einem Rückenpolster (40) versehen ist.

16. Vorrichtung (1) einem der vorhergehenden Ansprüche, **dadurch gekennzeichnet, dass** sie außerdem Schultergurte (50) für ihren Transport durch den Benutzer (2) umfasst.

17. Vorrichtung (1) einem der vorhergehenden Ansprüche, **dadurch gekennzeichnet, dass** die Vorrichtung (1) von dem Benutzer (2) getragen wird und sie bei der Benutzung ferner dehnbare elastische Mittel (60) umfasst, die den Beckengurt (10) mit den unteren Gliedmaßen (9) des Benutzers (2) verbinden.

## Claims

1. Non-motorised physical-assistance device (1) of the exoskeleton type, adapted to be worn by a user (2) in order to relieve, in use, at least the upper limbs (5) of said user manually lifting and transporting a load (C), said device (1) including in particular a pelvic belt (10) suitable for surrounding the waist/hips (3) of the user (2) and means (20) for assisting the lifting and transporting of a load relieving the back (4), the upper limbs (5), the shoulders (6) and the neck (7) of the user (2), the means (20) assisting the lifting and transporting of a load comprising a member (21) for transferring, solely onto the pelvic belt (10), the vertical forces caused by the weight of the load (C) lifted/transported by the user (2), the force-transfer member (21) consisting of a rigid dorsal support, **characterised in that** said rigid dorsal support includes a single central column (22) dividing into two lateral branches (26) passing above the shoulders (6) of the user (5), without contact with the latter or the arms of the user, and **in that** said lateral branches (26) rise perpendicularly to the central column (22) and project forwards on either side of the neck (7) of the user (5).

2. Device (1) according to claim 1, **characterised in that**, said device (1) being worn by the user (2) and in use, the two lateral branches (26) are vertically spaced from the shoulders (6) of the user (2) by a distance D of between approximately 2 and 20 centimetres, preferably between substantially 5 and 15 centimetres.

3. Device (1) according to claim 2, **characterised in that** the lateral branches (26) are adjustable in height and/or in rotation with respect to the central column (22).

4. Device (1) according to any one of claims 1 to 3, **characterised in that** the central column (22) is adjustable in height at least at an upper part (25).

5. Device (1) according to any one of claims 1 to 4, **characterised in that** the force-transfer member (21) furthermore includes slender manually extensible/retractable means (30) for changing the length thereof, said slender means (30) being disposed at least along the lateral branches (26) of the central column (22).

6. Device (1) according to claim 5, **characterised in that** the slender means (30) are wires, cables, cords or straps.

7. Device (1) according to either one of claims 5 to 6, **characterised in that** the lateral branches (26) of the force-transfer member (21) consist of hollow tubes and have the slender means (30) at least partially passing through them.

8. Device (1) according to any one of claims 5 to 7, **characterised in that** the slender means (30) each pass through a guide provided with friction-reduction means (37) .

9. Device (1) according to claims 7 and 8, **characterised in that** the friction-reduction means (37) consist of an internal Teflon^{®} coating locally covering the interior of the hollow tubes of the lateral branches (26).

10. Device (1) according to any one of claims 5 to 9, **characterised in that** each slender means (30) is connected to a winder/unwinder (31) secured to the central column (22) and, in use, enabling said slender means (30) to automatically extend/retract to change length.

11. Device (1) according to any one of claims 5 to 10, **characterised in that** the slender means (30) are each equipped, at a free end, with a manual gripping means (32) of the sleeve type.

12. Device (1) according to claim 11, **characterised in that** it is equipped, close to at least one of the handles (32), with a manual brake (35) disengageable by the user (2) to lock/unlock the length of said slender means (30).

13. Device (1) according to any one of claims 1 to 11, **characterised in that** the central column (22) includes an articulation pivot (24) in a zone close to the connection (12) with the pelvic belt (10) to follow the slope of the back (4) of the user (2) with respect to his lower limbs (9) .

14. Device (1) according to any one of claims 1 to 12, **characterised in that** an elastic return element connects the pelvic belt (10) to a lower part (23) of the central column (22).

15. Device (1) according to any one of claims 1 to 13, **characterised in that** the central column (22) is provided with at least one dorsal cushion (40).

16. Device (1) according to any one of the preceding claims, **characterised in that** it also includes shoulder straps (50) for transport thereof by the user (2).

17. Device (1) according to any one of the preceding claims, **characterised in that**, said device (1) being carried by the user (2) and in use, it furthermore includes extensible elastic means (60) connecting the pelvic belt (10) to the lower limbs (9) of the user (2).
